# EUROPÄISCHE PATENTSCHRIFT

(11) **EP 0 477 715 B1**
(45) Veröffentlichungstag und Bekanntmachung des Hinweises auf die Patenterteilung: **17.11.1994**
(21) Anmeldenummer: 91115686.7
(22) Anmeldetag: 16.09.1991
(51) Int. Cl.: B23D 51/04, B23D 47/04, B21D 43/28

(54) **Vorrichtung zum Führen, Spannen und Entladen eines stangenförmigen Werkstückes oder Rohres für eine Werkzeugmaschine**
Device for guiding, clamping or discharging of a bar-shaped workpiece or a tube for a machine tool
Dispositif pour guider, tendre et décharger d'une pièce à usiner en barres ou des tubes pour une machine-outil

(30) Priorität: 26.09.1990 IT 2182390 U
(43) Veröffentlichungstag der Anmeldung: 01.04.1992
(73) Patentinhaber: SALA S.p.A., I-38056 Levico (IT)
(72) Erfinder: Mosca, Claudio, I-38056 Levico (IT); Andreatta, Livio, I-38056 Levico (IT)
(74) Vertreter: Mayer, Hans Benno, Dipl.-Ing.

(56) Entgegenhaltungen:
- DE-A- 2 921 194
- DE-A- 3 334 763
- DE-B- 2 641 255

## Beschreibung

Die vorstehende Erfindung betrifft eine Vorrichtung zum Fuehren, Spannen und Entladen eines stangefoermigen Werkstueckes oder eines Rohres in einer Werkzeugmaschine, besonders einer Saegemaschine.

Es ist bekannt, dass in Saegemaschinen das zu trennende Werkstueck einer Vorschubbewegung unterworfen wird, so lange bis das Ende des Werkstueckes gegen einen Anschlag stoesst. Im Anschluss daran, wird das Werkstueck, in Form einer Stange oder eines Rohres, unter Verwendung hydraulisch betaetigbarer Spannbacken gespannt. Nach Durchfuehrung des Trennvorganges unter Verwendung eines Saegeblattes, das auf- und abwaertsbewegbar ist, erfolgt ein Oeffnen der hydraulischen Spannbacken, um ein Entladen des abgeschnittenen Werkstueckes zu ermoeglichen.

Bei bekannten Vorrichtungen dieser Art konnte festgestellt werden, dass zum Spannen bzw. zum Entspannen sowie fuer das Entladen des abgeschnittenen Werkstueckes erhebliche Zeit notwendig ist, da es nach dem Spannvorgang fuer das stangenfoermige Werkstueck oder das Rohr und die Durchfuehrung des Saegevorganges unbedingt erforderlich ist, dass das Saegeblatt erneut und vollstaendig in seine Ruhelage zuruecklaeuft. Erst dann kann ein Oeffnen der hydraulischen Spannbacke erfolgen. Es konnte bei den bekannten Spannvorrichtungen auch festgestellt werden, dass das Entladen des abgeschnittenen Werkstueckes in unkontrollierbarer Weise entlang der Auflageebene der Werkzeugmaschine erfolgt. Tatsache, die aeusserst unerwuenscht ist, besonders dann, wenn nachfolgende automatisch arbeitende Werkzeugmaschinen, z.B. Entgratmaschinen oder Buerstmaschinen mit den abgeschnittenen Werkstuecken zu beschicken sind.

Es konnte bei den bekannten Einrichtungen zudem festgestellt werden, dass das Beschicken des Werkstueckes bis zum Endanschlag nicht immer zuverlaessig und mit der gewuenschten Praezision erfolgt.

Aus der DE-A-3.334.763 ist eine Feststellvorrichtung zum Spannen eines zu zertrennenden Werkstueckes bekanntgeworden, in der zum Festspannen des Werkstueckes Spannbackenpaare Verwendung finden, die in einer horizontal angeordneten Bezugsebene montiert sind. Bei dieser Vorrichtung ist es erforderlich, mit der Oeffnungsbewegung der Backenpaare solange abzuwarten, bis das Saegeblatt vollstaendig aus dem zu trennenden Werkstueck ausgetreten ist - dies fuehrt zu einer Verlaengerung des Schneidvorganges und somit zu einem Absinken des Wirkungsgrades der Saegemaschine. Da in der bekannten Vorrichtung das Werkstueck in einer horizontal angeordneten Ebene gespannt wird, ist es ferner notwendig, zum Entladen des abgetrennten Werkstueckes eine als Auswerfer arbeitende Vorrichtung vorzusehen, die eine Vergroesserung des baulichen Aufwandes mit sich bringt und kein gefuehrtes Abtransportieren des abgetrennten Werkstueckes, z.B. zum ordentlichen Ablegen in einem Lagerkasten erlaubt.

Aufgabe der vorstehenden Erfindung ist es, die Nachteile des Standes der Technik zu vermeiden und eine Spannvorrichtung fuer abzusaegende Werkstuecke zu schaffen, mit der es moeglich ist, den Wirkungsgrad der Werkzeugmaschinen wesentlich zu erhoehen und zu gewaehrleisten, dass das Werkstueck mit Praezision bis zum gewuenschten Endanschlag vorschiebbar ist und ferner ein regelmaessiges und gefuehrtes Entladen des abgeschnittenen Werkstueckes ueber den Maschinentisch moeglich wird.

Diese Aufgabe wird erfindungsgemaess dadurch geloest, dass eine Vorrichtung zum Fuehren, Spannen und Entladen eines stangenfoermigen Werkstueckes oder Rohres fuer eine Werkzeugmaschine Verwendung findet, besonders fuer eine Saegemaschine, bestehend aus einem beweglich angeordneten Spannstock, der mit einem Einschnitt zur Aufnahme eines Saegeblattes versehen ist, wobei gegenueber einer beweglich angeordneten Spannbacke vor dem Saegeblatt eine ortsfest angeordnete Spannbacke zugeordnet ist, und die Auflageebene fuer das Werkstueck als geneigte Ebene ausgebildet ist und auf der, der beweglichen Spannbacke gegenueberliegenden Seite und im Anschluss an das Saegeblatt, eine zusaetzliche schwenkbar gelagerte Spannbacke vorgesehen ist, die von einer Spannlage, in der das Werkstueck gegen die Backe gespannt wird, in eine Ruhelage, in der die Auflageebene und das Werkstueck freigegeben werden, verschwenkbar ist.

In vorteilhafter Weise ist die Auflageebene fuer das abzusaegende Werkstueck als geneigte Ebene ausgebildet. Mit einer Vorrichtung, die diesen Aufbau aufweist, wird der wesentliche Vorteil erzielt, dass waehrend des Beschickungsvorganges des zu zersaegenden Werkstueckes, dieses praezise auch im Anschluss an das Saegeblatt, d.h. bis zum Endanschlag, gefuehrt wird. Durch Schliessen des hydraulischen Spannstockes wird das Werkstueck mit Sicherheit vor dem Saegeblatt gespannt und alle Schnittkraefte werden zum Grossteil auf die fest angeordnete Spannbacke des Spannstockes abgefuehrt.

Unter Vorsehung einer zusaetzlichen schwenkbar gelagerten Spannbacke nach dem Saegeblatt, wird ein sicheres Spannen des abzusaegenden Werkstueckes auch im Anschluss an das Saegeblatt erreicht und die Moeglichkeit geschaffen, das abgesaegte Werkstueck in gefuehrter Weise, rasch und sofort nach Beendigung des Saegevorganges zu entladen. Es erfolgt ein automatisches Entladen des abgesaegten Werkstueckes entlang der geneigten Ebene, d.h. vor Oeffnen des hydraulischen Hauptspannstockes, der notwendigerweise bis zum vollstaendigen Ruecklauf des Saegeblattes in seine Ruhelage geschlossen bleiben muss.

Fuer den weiteren Vorschub des stangenfoermigen Werksstueckes muss der hydraulisch betaetigte Hauptspannstock nur geringfuegig geoeffnet werden, soweit wie fuer den Materialdurchlass erforderlich ist.

Der Erfindungsgegenstand wird nun anhand eines Ausfuehrungsbeispiels genauer beschrieben und in den Zeichnungen dargestellt.

Es zeigen:
Fig. 1 eine Draufsicht auf die erfindungsgemaesse Spannvorrichtung;
Fig. 2 die Spannvorrichtung in Ansicht entlang der Linie II-II der Fig. 1, unter Darstellung der schwenkbaren Spannbacke in ihrer Spannstellung; und
Fig. 3 die Vorrichtung gemaess Fig. 2 mit der schwenkbaren Spannbacke in angehobener Stellung oder Ruhelage.

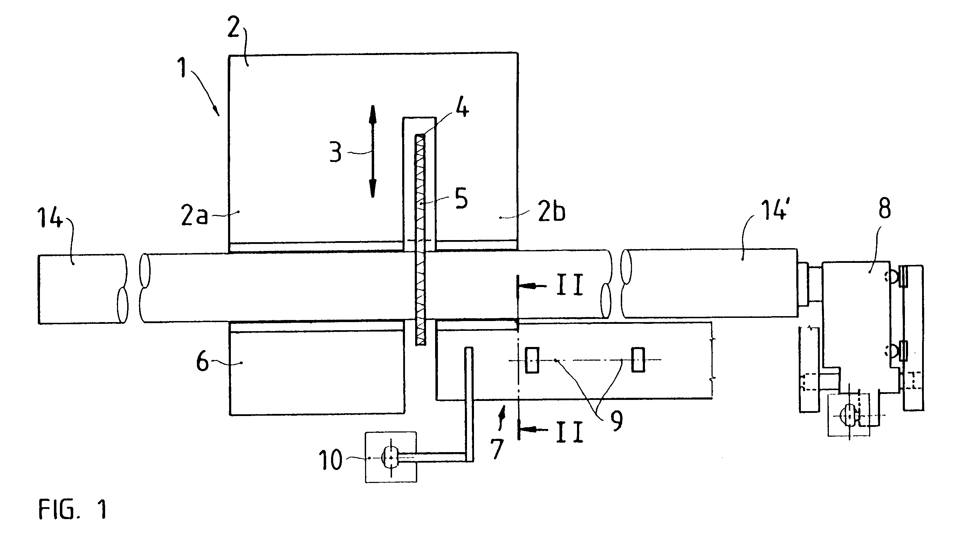

Wie der Fig. 1 zu entnehmen ist, besteht die Spannvorrichtung 1 der Saegemaschine aus einer Hauptspannbacke 2, die unter Verwendung einer Kolben-Zylindereinheit, die nur schematisch durch den Pfeil 3 dargestellt ist, antreibbar ist.

Die hydraulisch angetriebene Spannbacke weist einen Einschnitt 4 auf, um ein freies Durchlaufen des Saegeblattes 5 waehrend des Trennvorganges zu ermoeglichen. Vor dem Teilstueck 2a der hydraulischen Spannbacke 2, d.h. vor dem Saegeblatt 5, ist ferner eine ortsfest vorgesehene Spannbacke 6 angeordnet.

Gegenueber dem Teilstueck 2b der Spannbacke 2, welche zum Spannen des Werksstueckes 14' dient, Abschnitt, der im Anschluss an das Saegeblatt 5 vorgesehen ist, ist eine gesamthaft mit 7 gekennzeichnete Spannbacke vorgesehen.

Die Spannbacke 7 erstreckt sich ungefaehr vom Saegeblatt 5 bis zur Anschlagvorrichtung, die gesamthaft mit 8 gekennzeichnet ist. Die Spannbacke 7 kann um Schwenkzapfen 9 verschwenkt werden. Die Schwenkzapfen 9 sind mit dem oberen Rahmenteil der Saegemaschine wirkverbunden, wobei die Schwenkbewegung der Spannbacke 7 unter Zuhilfenahme einer Kolben-Zylindereinheit 10 eingeleitet wird.

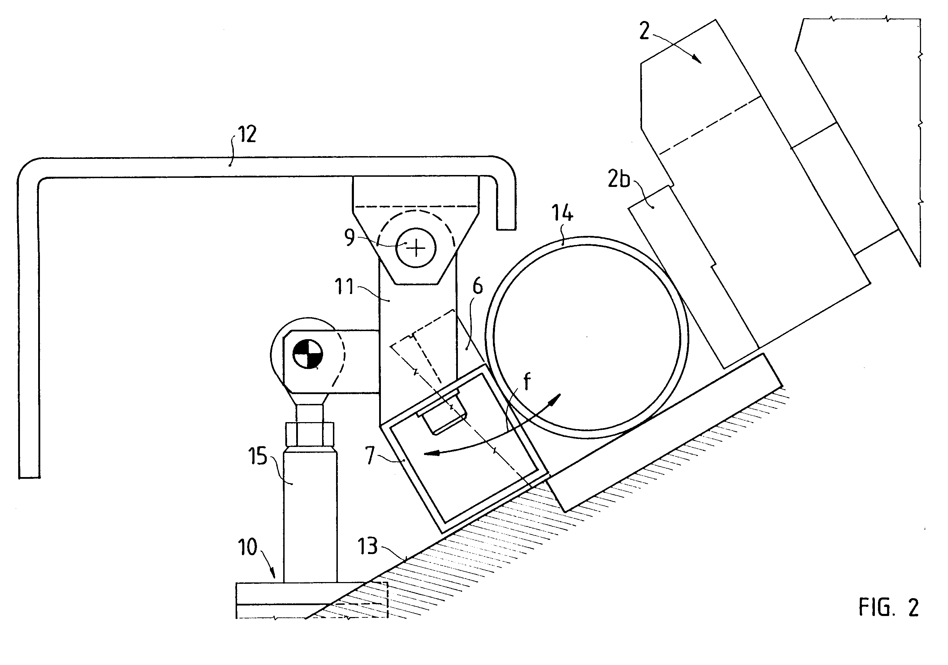

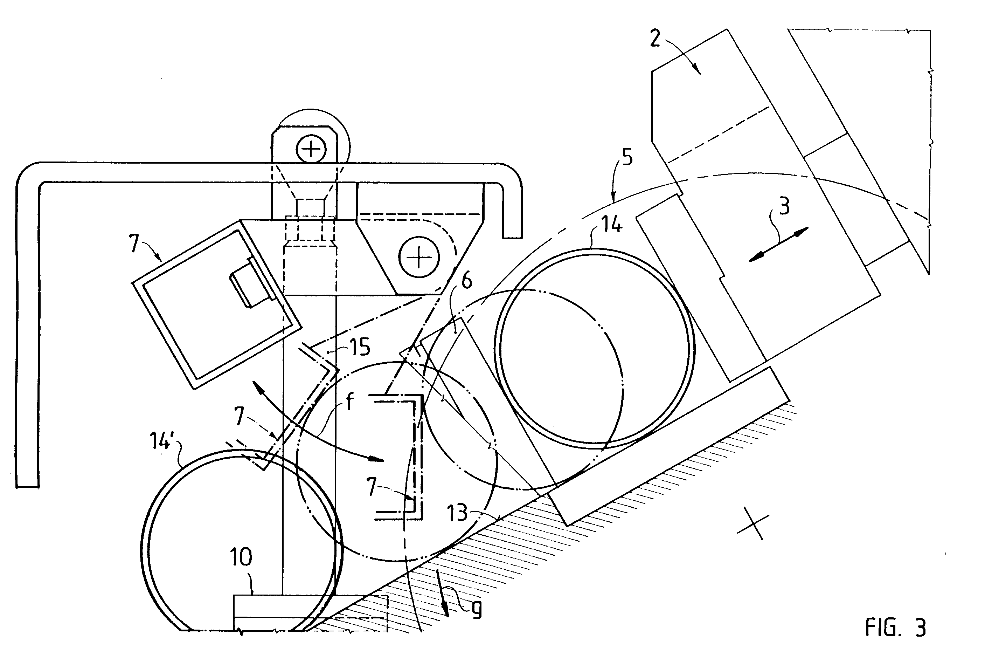

Wie den Figuren 2 und 3 zu entnehmen ist, besteht die schwenkbar gelagerte Spannbacke 7 aus einem Rohrstueck oder einem Profilteil, in vorteilhafterweise aus einem Vierkantrohr. Die gesamte Spannbacke 7 ist an Lagerarmen 11 befestigt, diese werden von Schwenkzapfen 9 aufgenommen, die mit dem festen Teil des Maschinengestells 12 verbunden sind. Unter Verwendung einer Kolben-Zylindereinheit 10 kann der Spannbacke 7 eine gesteuerte Schwenkbewegung verliehen werden, wie dies durch den Pfeil f angedeutet ist. Mit besonderem Vorteil ist die Auflageebene 13 zur Aufnahme des abzusaegenden Rohres oder Werkstueckes 14 als geneigte Ebene ausgebildet, was ein Entladen der Werkstuecke 14 durch eine Rutsch- oder Rollbewegung moeglich macht.

In Fig. 2 ist die Stange 15 der Kolben-Zylindereinheit 10 in eingefahrener Stellung dargestellt. Dabei wird die Spannbacke 7 in Richtung auf das Rohrstueck 14 gedrueckt, welches gegen den Abschnitt 2b der hydraulisch betaetigbaren Hauptspannbacke 2 gepresst wird.

Die Arbeitsweise der erfindungsgemaessen Vorrichtung wird nun genauer beschrieben:
Sobald das stangenfoermige Werkstueck oder das Rohr 14 mit dem in seiner Lage einstellbaren Anschlag 8 in Beruehrung kommt, wird ein Steuersignal in der Anschlagvorrichtung 8 erzeugt und ein Schliessen der hydraulisch angetriebenen Spannbacke 2 eingeleitet. Durch das Betaetigen des Arbeitszylinders 3 wird das Rohr 14 fest gegen die ortsfest angeordnete Spannbacke 6 gepresst. Die schwenkbare Spannbacke 7 wird durch den Arbeitszylinder 10, 15 nach unten verschwenkt (siehe Fig. 2), wodurch das Rohrstueck 14' ebenfalls gegen das fest angeordnete Spannbackenstueck 2b gepresst wird. Im Anschluss daran erfolgt der Saegevorgang durch Betaetigen des Saegeblattes 5, das von unten nach oben verschoben wird und in der durch den Pfeil g angedeuteten Schnittrichtung angetrieben wird.

Sobald das Saegeblatt 5 die mit einer Strichpunktlinie (Fig. 3) dargestellte Endlage erreicht hat, wird der Kolben-Zylindereinheit 10 erneut ein Steuersignal zugeleitet, das bewirkt, dass die Kolbenstange 15, wie in Fig. 3 dargestellt, nach oben ausgefahren wird, was zu einer Schwenkbewegung der Spannbacke 7 in deren Ruhelage fuehrt. Diese Lage ist mit durchgehenden Linien in Fig. 3 dargestellt. Waehrend der beschriebenen Schwenkbewegung folgt das abgeschnittene Werkstueck 14 (mit Strichpunktlinien dargestellt) der Schwenkbewegung der Backe 7 und rutscht oder rollt frei aber genau lagegefuehrt entlang der geneigten Ebene 13, um praezise, z.B. in einem Lagerbehaelter, abgelegt zu werden, oder unter Verwendung von nicht dargestellten Hilfsmitteln in festgelegter Lage einer folgenden Bearbeitungsmaschine, z.B. einer Entgratmaschine oder Buerstmaschine zugefuehrt zu werden.

Es ist an dieser Stelle besonders hervorzuheben, dass waehrend des Entladens des bereits abgesaegten Werkstueckes 14' das Rohr 14 noch zwischen Hauptspannbacke 2 und der fest angeordneten Backe 6 gespannt bleibt. Unmittelbar nach Entladen des abgesaegten Werkstueckes 14' durch Abrutschen ueber die geneigte Ebene 13, wird die schwenkbare Spannbacke 7 erneut in eine untere Lage, wie in Fig. 2 dargestellt, durch Betaetigen der Kolben-Zylindereinheit 10, 15 verschwenkt.

Erst wenn das Saegeblatt 5 unter die Auflageebene 13 abgesenkt wurde, erfolgt ein geringfuegiges Oeffnen der beweglichen Spannbacke 2. Diese Spannbacke 2 wird nur um einen kleinen Betrag geoeffnet, der ausreichend ist, eine weitere Vorschubbewegung des Rohres 14 bis zum Anschlag 8 durchzufuehren. Nachdem das Werkstueck 14 mit dem Anschlag 8 in Beruehrung gekommen ist, wird ueber bekannte Sensoren in der Anschlagvorrichtung 8 ein Steuersignal erzeugt, das den sofortigen Schliessvorgang des Hauptspannstockes 1 erneut einleitet.

Durch das Trennen der Bewegungsvorgaenge der Hauptspannbacke 2, der im wesentlichen die Aufgabe zukommt, das Werkstueck vor dem Saegeblatt 5 zu spannen, von den Bewegungsvorgaengen einer schwenkbar angeordneten zusaetzlichen Spannbacke 7, die im Anschluss an das Saegeblatt vorgesehen ist, wird es moeglich, die Vorgaenge zum Spannen sowie zum Entladen der Werkstuecke wesentlich zu beschleunigen, was zu einer merklichen Verkuerzung des gesamten Saegevorganges fuehrt. Neben diesem bemerkenswerten Zeitgewinn wird weiterhin in vorteilhafter Weise erreicht, dass das abgesaegte Werksstueck unmittelbar nach Beendigung des Trennvorganges aus der Maschine entladen wird und sicher gefuehrt, unter Durchfuehrung einer Rutsch- oder Rollbewegung, ueber die geneigte Ebene 13 entladen wird und dieser Entladevorgang waehrend der Schwenkbewegung der schwenkbar gelagerten Spannbacke 7 erfolgt.

## Patentansprüche

1. Vorrichtung zum Fuehren, Spannen und Entladen eines stangenfoermigen Werkstueckes (14) oder Rohres fuer eine Werkzeugmaschine, besonders fuer eine Saegemaschine (5), bestehend aus einem beweglich angeordneten Spannstock (1), der mit einem Einschnitt (4) zur Aufnahme eines Saegeblattes (5) versehen ist, wobei gegenueber einer beweglich angeordneten Spannbacke (2) vor dem Saegeblatt (5) eine ortsfest angeordnete Spannbacke (6) angeordnet ist, **dadurch gekennzeichnet**, dass die Auflageebene (13) als geneigte Ebene ausgebildet ist und auf der der beweglichen Spannbacke (2) gegenueberliegenden Seite und im Anschluss an das Saegeblatt (5) eine zusaetzliche, schwenkbar gelagerte Spannbacke (7) vorgesehen ist, die von einer Spannlage, in der das Werkstueck (14') gegen die Backe (2b) gespannt wird, in eine Ruhelage, in der die Auflageebene (13) und das Werkstueck (14') freigegeben werden, verschwenkbar ist.

2. Vorrichtung, nach Patentanspruch 1, **dadurch gekennzeichnet**, dass die schwenkbare Spannbacke (7) ueber Arme (11) und Schwenkzapfen (9) mit dem oberen Teil des Maschinengestelles (12) verbunden ist und die Spannbacke (7) mit einer steuerbaren Kolben-Zylindereinheit (10, 15) wirkverbunden ist.

3. Vorrichtung, nach Patentanspruch 1, **dadurch gekennzeichnet**, dass die schwenkbar Backe (7) sich vom Saegeblatt (5) bis zum Anschlag (8) fuer das Werkstueck (14') erstreckt.

## Claims

1. Device for guiding, clamping or discharging a bar-shaped workpiece (14) or a tube for a machine tool, especially for a sawing machine (5), comprising a mobile vice (1), which is provided with an indentation (4) for the reception of a saw blade (5), there being disposed opposite a mobile clamping jaw (2), in front of the saw blade (5), a fixed clamping jaw (6), characterized in that the bearing plane (13) is configured as an inclined plane and on the side lying opposite the movable clamping jaw (2), and adjoining the saw blade (5), there is provided an additional, pivotably mounted clamping jaw (7), which can be pivoted from a clamping position in which the workpiece (14') is clamped against the jaw (2b) into a rest position in which the bearing plane (13) and the workpiece (14') are released.

2. Device according to Patent Claim 1, characterized in that the pivotable clamping jaw (7) is connected via arms (11) and swivel pins (9) to the upper part of the machine stand (12) and the clamping jaw (7) is operatively connected to a controllable piston-cylinder unit (10, 15).

3. Device according to Patent Claim 1, characterized in that the pivotable jaw (7) extends from the saw blade (5) up to the stop (8) for the workpiece (14').

## Revendications

1. Dispositif pour le guidage, le bridage et le déchargement d'une pièce d'oeuvre (14) en forme de barre ou de tube pour une machine-outil, en particulier pour une scieuse (5), se composant d'un étau (1) monté mobilement, qui est muni d'une entaille (4) pour la réception d'une lame de scie circulaire (5), un mors de serrage (6) monté à position fixe étant disposé avant la lame de scie circulaire (5) en face d'un mors de serrage (2) monté mobilement, caractérisé en ce que le plan d'appui (13) est réalisé sous forme d'un plan incliné et un mors de serrage supplémentaire (7), monté pivotant, est prévu du côté opposé au mors de serrage mobile (2) et de façon adjacente à la lame de scie circulaire (5), lequel mors de serrage pivotant peut être amené, par pivotement, depuis une position de serrage dans laquelle la pièce d'oeuvre (14') est serrée contre le mors (2b) à une position de repos dans laquelle le plan d'appui (13) et la pièce d'oeuvre (14') sont libérés.

2. Dispositif selon la revendication 1, caractérisé en ce que le mors de serrage pivotant (7) est relié par l'intermédiaire de bras (11) et d'axes de pivot (9) à la partie supérieure du bâti de machine (12) et le mors de serrage (7) est opérationnellement relié à une unité pilotable à piston-cylindre (10, 15).

3. Dispositif selon la revendication 1, caractérisé en ce que le mors pivotant (7) s'étend de la lame de scie circulaire (5) jusqu'à la butée (8) pour la pièce d'oeuvre (14').
